# EUROPEAN PATENT SPECIFICATION

(11) **EP 1 047 273 B1**
(45) Date of publication and mention of the grant of the patent: **04.06.2003**
(21) Application number: 00303215.8
(22) Date of filing: 17.04.2000
(51) Int. Cl.: H04N 17/00, G01R 13/32, H04N 17/02, H04N 5/06, G01R 13/22

(54) **System for detecting synchronization information in a video signal**
System zur Detektion der Synchronisierinformation aus einem Videosignal
Système de détection d'information de synchronisation à partir d'un signal vidéo

(30) Priority: 17.04.1999 US 293653
(43) Date of publication of application: 25.10.2000
(73) Proprietor: Tektronix, Inc., Beaverton, OR 97077 (US)
(72) Inventor: Gerlach, Paul M., Beaverton, Oregon 97008 (US); Dobyns, Kenneth P., Beaverton, Oregon 97007 (US); Tallman, James L., Beaverton, Oregon 97007 (US)
(74) Representative: Burke, Steven David

(56) References cited:
- EP-A- 0 677 746
- FR-A- 2 639 456
- US-A- 5 614 944
- PATENT ABSTRACTS OF JAPAN vol. 1998, no. 10, 31 August 1998 (1998-08-31) & JP 10 136409 A (ASTRO DESIGN KK), 22 May 1998 (1998-05-22)
- PATENT ABSTRACTS OF JAPAN vol. 018, no. 205 (E-1536), 12 April 1994 (1994-04-12) & JP 06 006835 A (SANYO ELECTRIC CO LTD), 14 January 1994 (1994-01-14)

## Description

### FIELD OF THE INVENTION

The present invention relates to digital storage oscilloscopes in general, and to the processing of video signals in such a digital oscilloscope, in particular.

### BACKGROUND OF THE INVENTION

Video waveform monitors, for example the Tektronix 1740 and 1750 series and the digital video waveform monitor VM700, are known. Such monitors are specialized and relatively expensive test equipment meant for analyzing video signals. These monitors have the capability to display video waveforms and vector diagrams. In addition, they have the capability to display images represented by video signals, thus allowing the them to act as video monitors. This may be done, for example, by sampling the received video signal, then generating from the video samples an array of display pixels representing the image carried by the video signal. This array of display pixels is displayed on a display device associated with the video waveform monitor. However, such a capability requires a high sampling rate and large acquisition memory to store the video samples representing a frame of the image (sometimes termed record length). These requirements were met only in the relatively expensive, high-end, specialized video waveform monitors. It is desirable, however, to provide the video image display capability in general purpose digital storage oscilloscopes.

Each display pixel represents a respective spatial location (i.e. line (vertical) and horizontal location within that line) in the displayed image. The display pixel is generated from the video sample representing the image at the spatial location corresponding to that pixel's location, or from video samples in the spatial neighborhood of that pixel's location. The spatial location represented by each video sample must, therefore, be known to permit display pixels to be generated from the appropriate video samples.

One requirement for generating display pixels from the video samples in order to display an image represented by a video signal in this manner is to determine the location of synchronization signals in the video samples. It is from this information that the spatial locations (i.e. line within the video frame and horizontal location within the line) of each video sample may be determined. More specifically, detection of the vertical synchronization pulse provides an indication of the location of samples in line 1 (top) of the image represented by the video signal sample stream. Detection of each horizontal synchronization pulse after that provides an indication of the location of the sample representing the start (left edge) of the next horizontal line. The vertical displacement from the top of the image of a video sample may be determined by the horizontal raster line in which it occurs. The horizontal displacement from the left edge of the image of that video sample may be determined by the number of samples from the location of the sample representing the previous horizontal synchronization pulse to that video sample, all in a known manner.

One solution to finding the locations of the synchronization component was to oversample the video signal and digitally detect and trigger on the horizontal and vertical synchronization pulses. The location of these synchronization pulses may then be used to determine the spatial locations of the video samples, and then this information may be used to generate the display pixels. This method, however, requires a high sampling rate and/or a long record length. It also requires substantial computing power to analyze the samples to detect the synchronization pulses.

Another solution was to determine the location of a first synchronization signal, and then calculate the locations of the other synchronization pulses based on the published specification for the video signal. For example, for NTSC standard video signals, each horizontal line is specified to take 63.556 microseconds. Thus, by locating a first synchronization pulse, new lines should start every 63.556 microseconds after that. Alternatively, if the actual duration of the horizontal line from a video signal source is constant and known (e.g. 63.500 microseconds), then the same method may be used, even though the video signal is not strictly to specification. That is, if each horizontal line is specified to take 63.500 microseconds, then by locating a first synchronization pulse, new lines should start every 63.500 microseconds after that.

The former can work well with standard video signal generators, such as color bar generators, which produce signals which are strictly within the published video signal specifications. The latter can work with video signal generators which, though they may not generate video signals which are strictly to specification, generate video signals which are stable over time and have a known constant horizontal line duration.

There are, however, video signal generators which have constant but unknown horizontal line durations. With video signal generators with constant but unknown horizontal line durations, the above method will produce an image in which the image is tipped. That is, there will be a time difference between the constant horizontal line duration used to determine the locations of samples at the start of the horizontal lines, and the actual horizontal line duration of the video signal. The detected start of each horizontal line is, thus, displaced in time from the actual one by that time difference. This time difference between detected horizontal synchronization signals and actual synchronization signals is cumulative from line to line and causes the displayed image to appear slanted, or tipped.

There are also video signal generators for which horizontal line durations which may vary over time, such as video cameras or video tape recorder/playback machines. The above method does not work well with such video signal generators. With such video signal generators, the actual durations of the horizontal lines will vary randomly. The above method, however, detects the start of horizontal lines based on constant horizontal line times. There, thus, will be random time differences between the starting points of horizontal lines detected by the above method, and the actual starting points of the horizontal lines. The edges of an image derived from such a video signal generator will vary randomly as the location of the displayed pixels diverges from their desired location in the video signal due to the time varying horizontal line duration.

A similar solution to locating the synchronization component involves determining the location of a first horizontal synchronization pulse, then searching for the next horizontal synchronization pulse in the neighborhood of 63.556 microseconds after the first. This search is repeated for each horizontal line. The measured duration of the current horizontal line is used to locate where the search for the next horizontal line is to begin. This solution can cope with video signal sources which are not stable over time. However, this requires that a search be performed after each horizontal line, requiring substantial calculating power. In addition, there can be a one pixel uncertainty in the detection of the location of the horizontal synchronization pulse from line to line. This causes some horizontal lines to be shifted to the right while others are shifted to the left one pixel. The results is a ½ pixel error or horizontal dithering. While this solution permits images from a wider range of video signal sources to be displayed, substantial computational power is required, and the horizontal dithering, which varies from line to line, creates less sharp edges in the displayed image.

Devices for measuring video signal parameters are known, for example, from JP-A-10 136 409 and JP-A-6 006 835. A digital oscilloscope comprising an acquisition rasterizen is known from EP-A-677746.

It is desirable that relatively inexpensive, low-end digital oscilloscopes provide the capability to display images represented by video signals supplied to their input probes. A solution for the problem of locating synchronization signals in the received video signal, thus permitting identification of the spatial location of video samples corresponding to display pixels, which permits operation with a wide range of video signal sources which need not be strictly to specification, but which does not require substantial computational power and does not result in lower image quality due to horizontal dithering is also desirable.

### BRIEF SUMMARY OF THE INVENTION

The invention is set out in claim 1. Further features and embodiments are set out in the dependent claims.

### BRIEF DESCRIPTION OF THE DRAWING

In the drawing:
Fig. 1 is a block diagram of an oscilloscope system according to an embodiment of the present invention;
Fig. 2 is a waveform diagram useful in understanding the operation of the oscilloscope system illustrated in Fig. 1.

### DETAILED DESCRIPTION OF THE INVENTION

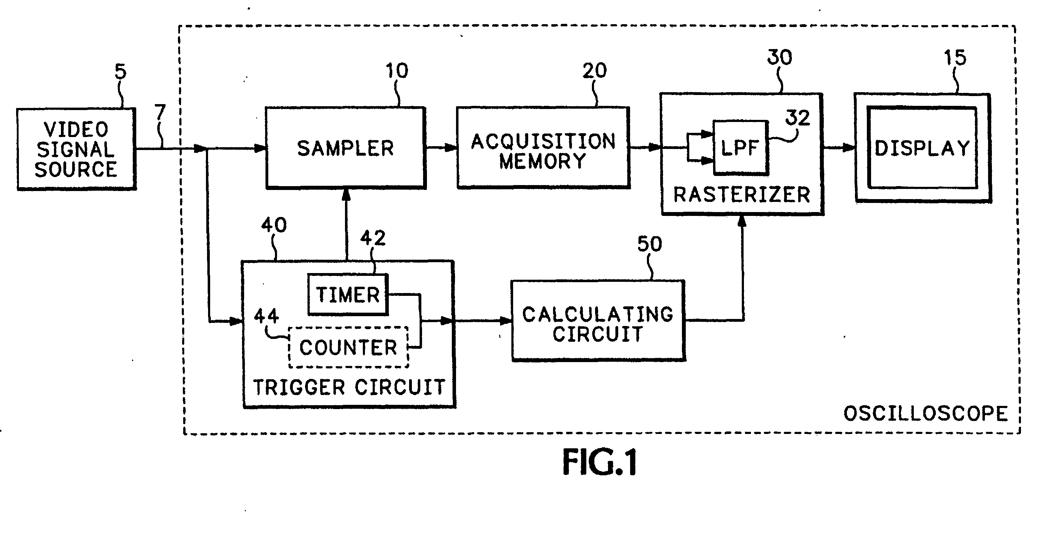

Fig. 1 is a block diagram of an oscilloscope system according to an embodiment of the present invention. Fig. 1 shows only those elements of an oscilloscope which are necessary to understand the operation of the invention. One skilled in the art will understand what other elements are present in an oscilloscope and how the illustrated elements are interconnected with those elements.

In Fig. 1, an output terminal of a source 5 of a video signal is coupled through an oscilloscope probe 7 to a data input terminal of a sampler 10. For example, the video signal source 5 may be a video camera, or video signal generator. An output terminal of the sampler 10 is coupled to an input terminal of an acquisition memory 20. An output terminal of the acquisition memory 20 is coupled to a data input terminal of a rasterizer 30. An output terminal of the rasterizer 30 is coupled to an input terminal of a display device 15. The oscilloscope probe 7 is also coupled to an input terminal of a trigger circuit 40. A first output terminal of the trigger circuit 40 is coupled to an input terminal of a calculating circuit 50 and a second output terminal of the trigger circuit 40 is coupled to a control input terminal of the sampler 10. An output terminal of the calculating circuit 50 is coupled to a control input terminal of the rasterizer 30. The combination of the sampler 10, the acquisition memory 20, the rasterizer 30, the display device 15, the trigger circuit 40 and the calculating circuit 50 are comprised in an oscilloscope.

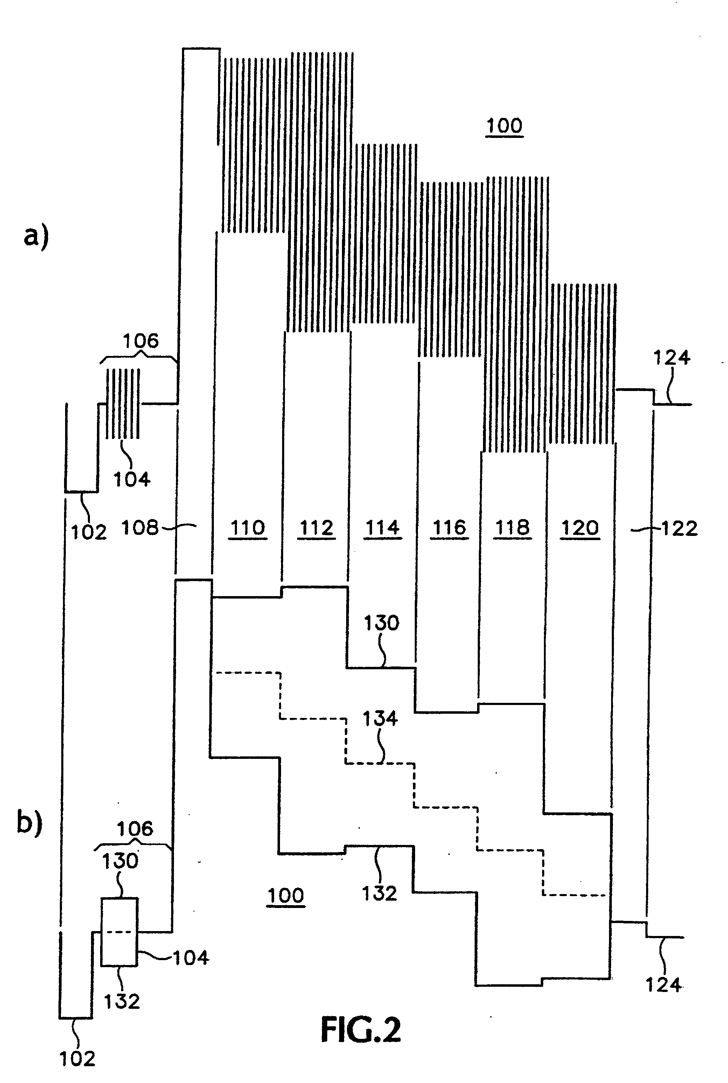

The video signal from the video signal source 5 is a composite video signal containing a luminance component representing the gray scale information of the image, a chrominance component representing the color information of the image, and a synchronizing component containing information identifying the location of the top of the raster (vertical synchronization) and the beginning of each horizontal line in the raster (horizontal synchronization). Fig. 2 is a waveform diagram useful in understanding the operation of the oscilloscope system illustrated in Fig. 1. Fig. 2 illustrates one horizontal line 100 of an NTSC video signal in which the image represented by the video signal is the well known image of color bars. Fig. 2a is a waveform diagram of a composite video signal as received from the video signal generator 5 (of Fig. 1) at the oscilloscope probe 7. In Fig. 2a, a horizontal synchronization pulse 102 is followed by a color burst 104 on a back porch 106. Following the back porch 106 are a series of color bars 108 to 122, representing white (108), yellow (110), cyan (112), green (114), magenta (116), red (118), blue (120), and black (122) respectively. All except the white (108) and black (122) color bars, include a color subcarrier signal (represented by vertical hatching) having a phase and amplitude corresponding to the color of that bar superimposed on a luminance value also corresponding to that color, all in a known manner. The color bars are followed by a front porch 124, which is followed by the horizontal synchronization signal for the following line (not shown).

Present oscilloscopes include circuitry which permits acquisition of samples representing the peak values of a received signal during the sample period. When this circuitry is operating, the oscilloscope is termed to be operating in 'peak detect' mode. In the 'peak detect' mode, for each sample time, a minimum and a maximum value of the observed signal over that sample period, are detected. That is, two multibit samples are produced for each sample period, all in a known manner. In the illustrated embodiment, the oscilloscope is configured to operate in the 'peak detect' mode.

Referring again to Fig. 1, in operation, when a signal acquisition is triggered (to be described in more detail below), the sampler 10 samples the video signal 100 at a predetermined sampling rate. In the illustrated embodiment, the sampler 10 produces samples representing the video signal every 800 nanoseconds (nsec), although other sampling rates may be used and/or may be selectable by a user of the oscilloscope, subject to a constraint described in detail below. In the illustrated embodiment, the samples are multibit digital samples having values representing the value of the video signal at the time represented by that sample. In the illustrated embodiment, these multibit digital samples have nine bits each. Samples containing any number of bits may be used, although samples having at least eight bits are preferred.

For an NTSC video signal, the color subcarrier frequency is substantially 3.58 MHz, having a period of substantially 280 nsec. In an 800 nsec sample period, there are nearly three complete cycles of the color subcarrier. Thus, when such a signal is processed by an oscilloscope operating in the 'peak detect' mode, the maximum value for that sample time represents the maximum value of those cycles of the color subcarrier, and the minimum value for that sample time represents the minimum value of those cycles of the color subcarrier. In order to properly acquire the maximum and minimum excursions of the color subcarrier, the sampling period used must be greater than the period of the color subcarrier of the video signal being acquired (e.g. greater than substantially 280 nsec for an NTSC video signal).

The combination of the maximum values of all the sample periods form an upper perimeter of an envelope of the video signal and the minimum values of all the sample periods form a lower perimeter of the envelope. The 'peak detect' sampled video signal of Fig. 2a is illustrated in Fig. 2b. In locations where the chrominance component is present, as indicated by the presence of a color subcarrier signal (e.g. color burst 104, and color bars 110 - 120), samples representing the upper perimeter 130 have distinct values compared to the samples representing the lower perimeter 132. At all other locations, samples representing the upper and lower perimeters have the same values.

In a composite video signal not every horizontal line interval contains image data. Some horizontal lines are within the vertical synchronization interval and some are within over-scan interval and may contain other information than image information. In an NTSC video signal, image data begins on line 21 in field one of each frame. The trigger circuit 40 monitors the video signal, and when line 21 in field one of the frame is detected, it generates a control signal for the sampler 10 causing it to begin generating samples representing the video signal. Each set of samples stored in the acquisition memory 20 representing a horizontal line includes both the portion of the horizontal line containing image data, e.g. color bars 108 - 122 of Fig. 2; and the portion of the horizontal line containing non-image information, e.g. front porch 124, horizontal synchronization signal 102 and back porch 106.

Maximum and minimum value samples are generated in the sampler 10 and stored in the acquisition memory 20 in this manner until the last line containing image data in the raster has been sampled. When completed, the acquisition memory 20 contains minimum and maximum values representing the portion of the video signal containing image data for a frame of the image.

In general, the rasterizer 30 extracts samples from the acquisition memory 20 and produces a raster signal representing that data. That raster signal is then displayed on the display device 15. Under normal operation, the image displayed in this manner is a line, commonly called a trace, representing the waveform of the signal received at the oscilloscope probe 7. When the oscilloscope is operating in the normal peak detect mode, the displayed image is a white band indicating the envelope of the received signal.

In accordance with the present embodiment, however, the rasterizer 30 generates a raster of display pixels having intensity values which reproduce the image represented by the video signal on the display device 15. To generate this raster of pixels, the rasterizer 30 associates each pixel in the display raster with a video sample in the acquisition memory 20 at the same spatial location as the display pixel, or with some plurality of video samples in the spatial neighborhood of the location of the display pixel. Each display pixel is generated from values of the associated video sample, or samples. The rasterizer 30 may be implemented in hardware, or by a microprocessor executing a program for analyzing the video samples from the acquisition memory 20, as described below, to generate the raster of pixels.

In order to associate display pixels with video samples, the rasterizer 30 must determine the spatial location of each video sample in the acquisition memory 20. To do this, the rasterizer 30 must first determine the location of the horizontal synchronization signal for each horizontal line stored in the acquisition memory 20. From this information, the rasterizer 30 can determine both the horizontal line (vertical location), and the horizontal location within that line, i.e. the spatial location, of all stored samples. The combination of the trigger circuit 40 and calculating circuit 50 provides the locations of the horizontal synchronization signals to the rasterizer 30.

As described above, the trigger circuit 40 generates a control signal for the sampler 10 when the first line containing image data (i.e. line 21) is detected. This control signal conditions the sampler 10 to begin to sample the video signal. A timer 42 measures the time between each of those control signals. The resulting time is the actual frame time of the video signal. A trigger circuit 40, which can provide the control signal to the sampler 10, and a timer 42, which can measure the time between such control signals, may be implemented together on a single integrated circuit. For example, a model ADG365 trigger integrated circuit (manufactured by Tektronix, Inc.) provides both of these functions and can be used, in a known manner. While it is illustrated in Fig. 1 that the timer 42 is contained within the trigger circuit 40, this is merely to illustrate that in the illustrated embodiment the timer 42 is fabricated on the same integrated circuit as the trigger circuit 40. One skilled in the art will understand that the timer 42 may be fabricated separately and be responsive to the control signal generated by the trigger circuit 40.

The calculating circuit 50 calculates the information necessary to locate the horizontal synchronization signals for the horizontal lines stored in the acquisition memory 20. The number of horizontal lines in a video frame of a known video format is fixed and known. The time between successive horizontal synchronization signals, i.e. the horizontal line time, thus, may be calculated as the video frame time (from timer 42) divided by the total number of horizontal lines in a video frame. For example, in an NTSC video signal, there are 525 horizontal lines in a video frame. The horizontal line time, thus, is the video frame time divided by 525. In this manner, the average horizontal line duration for the frame is calculated and used to locate the starts of the horizontal lines in the video samples in the acquisition memory 20.

The calculating circuit 50 may be implemented in hardware as a divider circuit having a dividend input terminal coupled to receive the video frame time representative data, a divisor input terminal coupled to receive a signal representing the number of horizontal lines in a video frame, and a quotient output terminal, coupled to the rasterizer 30, for generating a signal representing the horizontal line time. Alternatively, the calculating circuit 50 may be implemented as a microprocessor executing a control program to divide the video frame time by the number of horizontal lines in a frame, in a known manner. This microprocessor may be dedicated to the calculating circuit 50 or may perform other functions in the oscilloscope.

A more general implementation may further utilize a counter 44, illustrated in phantom in Fig. 1, present in the ADG365 trigger integrated circuit (described above). The counter 44 may be configured in a known manner to detect and count the number of horizontal synchronization signals detected in a frame of the video signal. The number of horizontal synchronization signals in a video frame thus counted is also supplied to the calculating circuit 50. The calculating circuit 50 divides the video frame time from timer 42 by the number of horizontal pulses from counter 44 to generate the horizontal line time, as described above. This arrangement permits the oscilloscope to display images transmitted in any video format, such as NTSC, PAL, SECAM, etc. Similarly to the timer 42, while it is illustrated in Fig. 1 that the counter 44 is contained within the trigger circuit 40, this is merely to illustrate that in the illustrated embodiment the counter 44 is fabricated on the same integrated circuit as the trigger circuit 40. One skilled in the art will understand that the counter 44 may be fabricated separately and be responsive to signals from the trigger circuit 40.

The location in the acquisition memory 20 of the video sample corresponding to the first horizontal synchronization signal (i.e. in line 21) may be located by analyzing the values of the samples near the beginning of the video samples in the acquisition memory 20 to detect the first horizontal synchronization pulse, in a known manner. The location of the second horizontal synchronization signal is then determined by calculating the location of the sample one horizontal line time (as generated by the calculating circuit 50) after the location of the first horizontal synchronization pulse. The location of the third horizontal synchronization pulse is determined by calculating the location of the sample two horizontal line times after the location of the first horizontal synchronization pulse, and so forth. From the locations of the respective horizontal synchronization signals, the spatial locations of the video samples corresponding to display pixel locations in the displayed image can be determined, as described above. This method for determining the locations of the horizontal synchronization signals, e.g. using the average horizontal line duration over the frame, minimizes a one pixel horizontal dither from line to line. In addition, vertical edges are displayed as straight vertical lines in each frame to frame.

The value of each display raster pixel is calculated from the maximum and minimum values stored as described above in the acquisition memory 20 for the video sample associated with that display pixel. The display pixel value is set to a value half way between the maximum and minimum values. This operation is a non-linear low pass filtering operation, and is represented in Fig. 1 by low pass filter (LPF) 32 having a first input terminal coupled to receive the maximum value and a second input terminal coupled to receive the minimum value for the associated video sample from the acquisition memory 20.

LPF 32 may be implemented by a summer having a addend input terminal coupled to receive the maximum value sample, and an augend input terminal coupled to receive the minimum value sample. The sum output terminal is coupled to a divide-by-two circuit (which may be implemented by shifting the output from the adder to the right one bit, in a known manner). Alternatively, LPF 32 may be implemented in a microprocessor performing the sum and divide operations in response to a control program. As described above, the microprocessor may be dedicated to the LPF 32 or may perform other operations in the oscilloscope.

Referring again to Fig. 2b, the pixel values generated by the LPF 32 in the manner described above for areas in which the color subcarrier is present (104 and 110 - 120) are illustrated as a dashed line waveform 134. The pixel values 134 are located halfway between the maximum values 130 and minimum values 132. This is substantially at the value of the luminance component of the video signal 100.

A video monitor for an oscilloscope as described above may be implemented on a relatively low end oscilloscope without requiring substantial added circuitry, increasing the cost. It reproduces a gray scale image corresponding to the received video signal relatively accurately even if the timing of the video signal is not exactly according to the video standard, or varies over time.

For interlaced video signals, it would be possible to adapt the techniques described above by applying them to individual fields, rather than frames.

## Claims

1. A digital storage oscilloscope, comprising:
a detector for detecting synchronization information in a video signal including a trigger circuit for detecting a predetermined location in each of successive frames of said video signal;
a timer, coupled to said trigger circuit, for detecting the time between said predetermined locations in successive frames;
calculating circuitry, responsive to said timer, for calculating a horizontal line time;
a sampler, coupled to said trigger circuit and responsive to said video signal, for generating samples representing said video signal starting when said trigger circuit detects said predetermined location;
an acquisition memory, coupled to said sampler, for storing said samples; and
a rasterizer, coupled to said acquisition memory and said calculating circuit, for producing a raster of display pixels representing an image carried by said video signal.

2. The digital storage oscilloscope of claim 1 wherein:
said trigger circuit further detects the presence of horizontal synchronization signals in said video signal;
said system further comprises a counter, coupled to said trigger circuit, for counting the number of detected horizontal synchronization signals between said predetermined locations in successive frames; and
said calculating circuitry comprises circuitry for dividing said time between predetermined locations in successive frames by said counted number of detected horizontal synchronization signals between said predetermined locations in successive frames.

3. The digital storage oscilloscope of claim 2 wherein said calculating circuit comprises circuitry for dividing said time between said predetermined locations in successive frames by a number of horizontal lines in each frame.

4. The digital storage oscilloscope of claim 3 wherein:
said sampler generates a maximum value sample and a minimum value sample for each of successive sample periods, said maximum value sample having a value representing said maximum value said video signal attained over said sample period, and said minimum value sample having a value representing said minimum value said video signal attained over said sample period;
said acquisition memory comprises circuitry for maintaining data representing said maximum and minimum value samples for each sample period; and
said rasterizer comprises a non-linear low pass filter, responsive to a maximum and minimum value sample for each sample period, for generating a display pixel representing the luminance component of said video signal represented by said sample.

5. The digital storage oscilloscope of claim 4 wherein said non-linear low pass filter comprises circuitry for generating said display pixel having a value representing the average of said values of said maximum value sample and said minimum value sample.

6. The digital storage oscilloscope of claim 1 further comprising a video camera generating said video signal.

7. The digital storage oscilloscope of claim 1 wherein said video signal is a video signal in a standard format such as NTSC, PAL, or SECAM, and said trigger circuit is configured to detect a first line of active video in a predetermined field of a video frame.

## Patentansprüche

1. Digitales Speicheroszilloskop, folgendes umfassend:
einen Detektor zum Detektieren von Synchronisationsinformationen in einem Videosignal einschließlich einer Triggerschaltung zum Detektieren einer vorgegebenen Position in jedem von aufeinanderfolgenden Vollbildern des Videosignals;
einen Zeitgeber, der mit der Triggerschaltung gekoppelt ist, zum Detektieren der Zeit zwischen den vorgegebenen Positionen in aufeinanderfolgenden Vollbildern;
eine Rechenschaltung, die auf den Zeitgeber anspricht, zum Berechnen einer horizontalen Zeilenzeit;
einen Abtaster, der mit der Triggerschaltung gekoppelt ist und auf das Videosignal anspricht, zur Erzeugung von Abtastwerten, die das Videosignal darstellen, wobei er startet, wenn die Triggerschaltung die vorgegebene Position detektiert;
einen Erfassungsspeicher, der mit dem Abtaster gekoppelt ist, zum Speichern der Abtastwerte; und
einen Rasterizer, der mit dem Erfassungsspeicher und der Rechenschaltung gekoppelt ist, zum Erzeugen eines Rasters von Anzeigepixeln, die ein Bild darstellen, das in dem Videosignal enthalten war.

2. Digitales Speicheroszilloskop nach Anspruch 1, wobei
die Triggerschaltung ferner das Vorhandensein von horizontalen Synchronisationssignalen in dem Videosignal detektiert;
das System ferner einen Zähler umfasst, der mit der Triggerschaltung gekoppelt ist, zum Zählen der Anzahl von detektierten horizontalen Synchronisationssignalen zwischen den vorgegebenen Positionen in aufeinanderfolgenden Vollbildern; und
die Rechenschaltung eine Schaltung zum Dividieren der Zeit zwischen den vorbestimmten Positionen in aufeinanderfolgenden Vollbildern durch die gezählte Anzahl an detektierten horizontalen Synchronisationssignalen zwischen den vorgegebenen Positionen in aufeinanderfolgenden Vollbildern umfasst.

3. Digitales Speicheroszilloskop nach Anspruch 2, wobei die Rechenschaltung eine Schaltung zum Dividieren der Zeit zwischen den vorbestimmten Positionen in aufeinanderfolgenden Vollbildern durch eine Anzahl von horizontalen Zeilen in jedem Vollbild umfasst.

4. Digitales Speicheroszilloskop nach Anspruch 3, wobei
der Abtaster einen Maximalabtastwert und einen Minimalabtastwert für jede von aufeinanderfolgenden Abtastperioden erzeugt, wobei der Maximalabtastwert einen Wert hat, der den Maximalwert darstellt, den das Videosignal über der Abtastwertperiode erzielt hat, und der Minimalabtastwert einen Wert hat, der den Minimalwert darstellt, den das Videosignal über der Abtastperiode erzielt hat;
der Erfassungsspeicher eine Schaltanordnung zur Beibehaltung von Daten umfasst, die die Maximal- und Minimalabtastwerte für jede Abtastperiode darstellen; und
der Rasterizer einen nicht-linearen Tiefpassfilter umfasst, der auf einen Maximal- und Minimalabtastwert für jede Abtastperiode anspricht, zum Erzeugen eines Anzeigepixels, das die Helligkeitskomponente des Videosignals darstellt, das von dem Abtastwert dargestellt ist.

5. Digitales Speicheroszilloskop nach Anspruch 4, wobei der nicht-lineare Tiefpassfilter eine Schaltanordnung zum Erzeugen des Anzeigepixels umfasst, das einen Wert aufweist, der den Mittelwert der Werte des Maximal- und Minimalabtastwertes darstellt.

6. Digitales Speicheroszilloskop nach Anspruch 1, das ferner eine Videokamera umfasst, die das Videosignal erzeugt.

7. Digitales Speicheroszilloskop nach Anspruch 1, wobei das Videosignal ein Videosignal in einem Standardformat ist, wie z.B. NTSC, PAL oder SECAM, und die Triggerschaltung derart konfiguriert ist, dass sie eine erste Zeile von aktivem Video in einem vorgegebenen Halbbild eines Videobildes detektiert.

## Revendications

1. Oscilloscope à mémoire numérique, comprenant :
un détecteur pour détecter des informations de synchronisation dans un signal vidéo comportant un circuit de déclenchement pour détecter une position prédéterminée dans chacune de trames successives dudit signal vidéo ;
un compteur de temps, couplé audit circuit de déclenchement, pour détecter le temps entre lesdites positions prédéterminées dans des trames successives ;
un circuit de calcul, sensible audit compteur de temps, pour calculer un temps de ligne horizontale ;
un échantillonneur, couplé audit circuit de déclenchement et sensible audit signal vidéo, pour produire des échantillons représentant ledit signal vidéo commençant lorsque ledit circuit de déclenchement détecte ladite position prédéterminée ;
une mémoire d'acquisition, couplée audit échantillonneur, pour stocker lesdits échantillons ; et
un convertisseur en image matricielle, couplé à ladite mémoire d'acquisition et audit circuit de calcul, pour produire une matrice de pixels d'affichage représentant une image portée par ledit signal vidéo.

2. Oscilloscope à mémoire numérique selon la revendication 1, dans lequel :
ledit circuit de déclenchement détecte en outre la présence de signaux de synchronisation horizontale dans ledit signal vidéo ;
ledit système comprend en outre un compteur, couplé audit circuit de déclenchement, pour compter le nombre de signaux de synchronisation horizontale détectés entre lesdites positions prédéterminées dans des trames successives ; et
ledit circuit de calcul comprend un circuit pour diviser ledit temps entre des postions prédéterminées dans des trames successives par ledit nombre compté de signaux de synchronisation horizontale détectés entre lesdites positions prédéterminées dans des trames successives.

3. Oscilloscope à mémoire numérique selon la revendication 2, dans lequel ledit circuit de calcul comprend un circuit pour diviser ledit temps entre lesdites postions prédéterminées dans des trames successives par un nombre de lignes horizontales dans chaque trame.

4. Oscilloscope à mémoire numérique selon la revendication 3, dans lequel :
ledit échantillonneur produit un échantillon de valeur maximale pour chacune de périodes d'échantillons successives, ledit échantillon de valeur maximale ayant une valeur représentant ladite valeur maximale que ledit signal vidéo a atteinte au cours de ladite période d'échantillon, et ledit échantillon de valeur minimale ayant une valeur représentant ladite valeur minimale que ledit signal vidéo a atteinte au cours de ladite période d'échantillon ;
ladite mémoire d'acquisition comprend un circuit destiné à maintenir des données représentant lesdits échantillons de valeurs maximale et minimale pour chaque période d'échantillon ; et
ledit convertisseur en image matricielle comprend un filtre passe-bas non linéaire sensible à un échantillon de valeur maximale et minimale pour chaque période d'échantillon, pour produire un pixel d'affichage représentant la composante de luminance dudit signal vidéo représenté par ledit échantillon.

5. Oscilloscope à mémoire numérique selon la revendication 4, dans lequel ledit filtre passe-bas non linéaire comprend un circuit pour produire ledit pixel ayant une valeur représentant la moyenne desdites valeurs dudit échantillon de valeur maximale et dudit échantillon de valeur minimale.

6. Oscilloscope à mémoire numérique selon la revendication 1, comprenant en outre une caméra vidéo produisant ledit signal vidéo.

7. Oscilloscope à mémoire numérique selon la revendication 1, dans lequel ledit signal vidéo et un signal vidéo ayant un format normalisé tel que NTSC, PAL, ou SECAM, et ledit circuit de déclenchement est configuré pour détecter une première ligne de vidéo active dans un champ prédéterminé d'une trame vidéo.
